# EUROPÄISCHE PATENTSCHRIFT

(11) **EP 1 997 610 B1**
(45) Veröffentlichungstag und Bekanntmachung des Hinweises auf die Patenterteilung: **29.04.2015**
(21) Anmeldenummer: 08004674.1
(22) Anmeldetag: 13.03.2008
(51) Int. Cl.: B29C 35/00, B29C 70/42, B29K 105/24

(54) **Verfahren zur Herstellung von Formteilen aus duroplastischen Kunststoffen**
Method for manufacturing moulded parts made of thermosetting materials
Procédé de fabrication de pièces moulées en matières synthétiques thermodurcissables

(30) Priorität: 31.05.2007 DE 102007025471; 30.01.2008 DE 102008006588
(43) Veröffentlichungstag der Anmeldung: 03.12.2008
(73) Patentinhaber: Leichtbau-Zentrum Sachsen GmbH, 01307 Dresden (DE)
(72) Erfinder: Hufenbach, Werner, Prof. Dr. Ing., 01324 Dresden (DE); Lepper, Martin, Dr., 01279 Dresden (DE); Werner, Jens, Dipl.-Ing., 01640 Coswig (DE)

(56) Entgegenhaltungen:
- EP-A1- 1 145 829
- EP-A1- 1 547 753
- US-A- 5 954 898

## Beschreibung

Die Erfindung betrifft ein Verfahren zur Herstellung von Formteilen aus duroplastischen Kunststoffen, insbesondere zur Herstellung von Leichtbauprofilen für den Einsatz in der Luftund Raumfahrttechnik, dem Fahrzeugbau, dem Maschinenbau sowie der Mechatronik und der Elektronikindustrie.

Bei der Um- oder Verformung thermoplastischer Kunststoffe wird der Thermoplast durch Erwärmen in einen erweichten Werkstoffzustand überführt, in dem er umformtechnisch bearbeitbar ist und anschließend durch Abkühlen wieder in einen festen, stabilen Zustand versetzt wird. Die gute und reversible Umformbarkeit von Thermoplasten bei relativ hohen Temperaturen beruht auf der zunehmenden Kettenbeweglichkeit der sie bildenden Makromoleküle sowie der fehlenden Vernetzung der Makromoleküle untereinander.

Die vorteilhafte Herstellung von Formteilen aus thermoplastischen Kunststoffen und die industriellen Einsatzmöglichkeiten sind jedoch abhängig von den erreichbaren mechanischen, chemischen und thermischen Eigenschaften des thermoplastischen Kunststoffes, die bei Einsatz von duroplastischen Werkstoffen wesentlich höher beziehungsweise besser sind. Nachteilig am Einsatz duroplastischer Werkstoffe ist, dass diese sich bisher aufgrund ihrer irreversiblen Kettenvernetzung nur urformbar herstellen lassen. Diese Urformung geschieht dabei meist durch Zusammenmischen reaktiver chemischer Komponenten, welche miteinander reagieren und das Makromolekül-Netzwerk bilden. Diese Vernetzung ist irreversibel und kann nur durch thermische Zersetzung wieder aufgehoben werden.

Da die Vernetzungsreaktion ein zeitintensiver Prozess ist, sind der wirtschaftlichen und kostengünstigen Herstellung duroplastischer Formteile aufgrund der hohen Herstellungs-Zykluszeiten Grenzen gesetzt. Auch das komplizierte Handling der meist flüssigen Ausgangsstoffe ist nachteilig.

Im Bereich der unverstärkten, kurzfaser- oder partikelverstärkten duroplastischen Kunststoffe sind insbesondere zwei urformtechnische Herstellungsverfahren für duroplastische Formteile bekannt, die Harzinjektionstechnik sowie die Pressmassentechnik.

Bei der Harzinjektionstechnik werden die flüssigen reaktiven Komponenten miteinander in einer Mischeinrichtung vermischt und anschließend in die Werkzeugkavität eingespritzt. Das Vermischen der einzelnen Komponenten kann auch innerhalb der Werkzeugkavität erfolgen. Zur Aushärtung beziehungsweise Ausführung der Vernetzungsreaktion der Komponenten wird das Gemisch über eine systemabhängige Konsolidierungszeit erwärmt.

Die Pressmassentechnik beruht auf der Verwendung speziell eingestellter Harzmassen, die bei Raumtemperatur teigig bis fest, jedoch formlos vorliegen und durch Erwärmung wieder in einen flüssigen Zustand überführt werden können. Diese formlose Harzmasse wird durch Presskraft in der Werkzeugkavität verteilt und anschließend thermisch gehärtet.

Im Bereich der endlosfaserverstärkten Kunststoffe kommen vor allem die Harzinjektionstechnik sowie die Autoklavtechnik zum Einsatz. Bei der Harzinjektionstechnik wird das trockene Verstärkungstextil durch Injektion der flüssigen Harzmatrix und anschließende thermische Vernetzung zum Verbundwerkstoff ausgehärtet.

Bei der Autoklavtechnik liegt als Ausgangsprodukt bereits ein mit Harz getränktes Textil vor, welches über Verpressen und thermische Aushärtung vernetzt wird.

EP 1 547 753 A1 offenbart ein Verfahren zur Herstellung von Formteilen aus duroplastischen Kunststoffe mittels vorgeformten Prepregs.

Bekannte Verfahren zur Herstellung duroplastischer Formteile sind des Weiteren das Extrusions- beziehungsweise Strangpressverfahren und das Pultrusionsverfahren.

Bei allen bekannten Verfahren wird als Ausgangsprodukt ein unvernetztes Harzsystem eingesetzt, das in flüssiger oder eingedickter Form vorliegt, während der urformtechnischen Herstellung zur Füllung der Werkzeugkavität in eine flüssige Form überführt wird und anschließend innerhalb des Werkzeuges z. B. thermisch vernetzt also in einen festen konsolidierten Zustand überführt wird. Füllstoffe können bereits im Harzsystem eingebettet sein oder in die Werkzeugkavität trocken eingebracht sein, wobei die Einbettung erst durch Infiltration mit der flüssigen Harzphase vorgenommen wird.

Diese Herstellungsverfahren sind rein urformtechnische Prozesse, das heißt, aus einem formlosen Stoff wird durch Schaffung eines Stoffzusammenhaltes ein fester Körper geschaffen, welcher die geometrische und stoffliche Erstform eines Produktes darstellt.

Nachteilig an diesen Herstellungsverfahren ist, dass der Formwerkstoff in eine flüssige Phase überführt werden muss, um Hohlräume im Formwerkstoff aufzufüllen und um eventuell vorhandene Fasern oder Partikel zu benetzen. Die damit verbundene Volumenschwindung muss durch komplizierte Werkzeuggestaltung kompensiert werden.

Des Weiteren ist die Dichtungsproblematik der Werkzeuge infolge des Einsatzes von flüssigen, meist niedrig viskosen Formwerkstoffen von Nachteil.

Die Konsolidierung duroplastischer Werkstoffe ist außerdem mit einem hohen Zeitaufwand verbunden, was sich durch den geringen Werkzeugdurchsatz auf die Kosten der hergestellten Profile auswirkt.

Im Bereich der Herstellungsverfahren duroplastischer Verbundwerkstoffe ist von Nachteil, dass hohe Anforderungen an die Prozessautomatisierung gestellt werden müssen, da die Verstärkungskomponenten keine ausreichende Eigensteifigkeit und Verschiebefestigkeit aufweisen, um konventionelle Handlingsysteme einsetzen zu können.

Eine rein umformtechnische Herstellung duroplastischer Kunststoffformteile ist bisher nicht bekannt.

Einen Ansatz zur umformtechnischen Verarbeitung duroplastischer Harzsysteme offenbart die Druckschrift EP 0 531 840 B1. Es wird ein Verfahren zur Herstellung eines faserverstärkten Kunststoff-Formteils, bei dem das Harzsystem eines Faserverbundwerkstoffes derart chemisch modifiziert ist, dass es sich bis zu einer bestimmten Temperatur thermoplastisch, daher wiederaufschmelzbar, verhält. Zur Vernetzung wird das Harzsystem nach der Umformung mit weiterem Reaktionsharz getränkt und stark erhitzt, so dass das Harzsystem aushärtet.

Nachteilig an dieser Lösung ist, dass das vorgeformte, sich thermoplastisch verhaltende Vorprodukt während der Konsolidierung durch die starke Erwärmung des Harzsystems seine Form verliert und aufschmilzt. Da die Aushärtung des duroplastischen Anteils eine gewisse Zeit benötigt, in welcher der thermoplastische Anteil jedoch schon komplett erweicht beziehungsweise geschmolzen ist, muss die Aushärtung in einem Werkzeug erfolgen, welches das erweichte Vorprodukt bis zur vollständigen Vernetzung stützt.

Es ist deshalb Aufgabe der Erfindung, ein Verfahren zur Herstellung von Formteilen aus duroplastischen Werkstoffen anzugeben, eine wirtschaftlich effiziente Verarbeitung unverstärkter oder verstärkter duroplastischer Kunststoffe in beliebige Geometrien aufweisende Formteile zu erreichen und die beschriebenen Nachteile weitestgehend zu unterbinden.

Die erfindungsgemäße Aufgabe wird dadurch gelöst, dass ein Umformprozess der duroplastischen Kunststoffe gemäß dem Anspruch 1 ausgeführt wird.

Mit diesem erfindungsgemäßen Verfahren können aus duroplastischen Kunststoffen quasi im Umformverfahren Formteile beliebiger Geometrie zeit- und kostensparend hergestellt werden. Formgebung und Aushärteprozess sind voneinander getrennt, so dass eine schnelle umformtechnische Formgebung mit entsprechend kurzen Zykluszeiten erreicht wird.

Die benötigten Werkzeuge können maximal ausgelastet werden, durch die auftretenden relativ geringen Umformkräfte infolge des erweichten Umformzustandes der Ausgangsprodukte verringert sich die Werkzeugbeanspruchung und damit auch die Werkzeugkosten.

Die festen, eigenstabilen Ausgangsprodukte ermöglichen ein unkompliziertes Handling beim Umformprozess und einen hohen Automatisierungsgrad des Verfahrensablaufes.

Dadurch, dass keine Aufschmelzung des Ausgangsproduktes während des Umformprozesses erfolgt, kann die konstruktive Ausführung der Werkzeuge vereinfacht werden und die Maßhaltigkeit der Formteile ist weniger problembehaftet.

Nach einer vorteilhaften Ausbildung des erfindungsgemäßen Verfahrens ist das Ausgangsprodukt ein unverstärktes duroplastisch vernetzendes Reaktionsharzsystem und wird unschmelzbar, glasartig, wenigstens teilvernetzt hergestellt.

Eine andere vorteilhafte Ausführung des erfindungsgemäßen Verfahrens sieht vor, dass das Ausgangsprodukt ein partikel-oder faserverstärktes duroplastisch vernetzendes Reaktionsharzsystem ist und unschmelzbar glasartig, wenigstens teilvernetzt hergestellt wird.

Eine weitere vorteilhafte Ausführung des erfindungsgemäßen Verfahrens sieht vor, dass das Formteil während der Nachvernetzung unterhalb der dem jeweiligen Vernetzungsgrad immanenten Glasübergangstemperatur verbleibt.

Damit werden ungewünschte Rückverformungen der umgeformten Formteile vermieden. Dies geschieht dadurch, dass die Nachvernetzung entweder durch langsames Erwärmen der Formteile unterhalb der dem jeweiligen Vernetzungsgrad immanenten Glasübergangstemperatur oder auch durch andere physikalische Prozesse, wie zum Beispiel durch Strahlenvernetzung erfolgen.

Es ist ebenfalls eine Nachvernetzung oberhalb der dem jeweiligen Vernetzungsgrad immanenten Glasübergangstemperatur möglich, wobei jedoch unerwünschte Rückverformungen der Formteile aufgrund frei werdender Eigenspannungen auftreten können, so dass während der Nachvernetzung eine Stützung der Formteile notwendig wird, um die umgeformte Gestalt der Formteile zu bewahren.

Mit dem erfindungsgemäßen Verfahren können insbesondere bei verstärkten Duroplasten Werkstoffe in variabler Art und Weise und der unterschiedlichsten Kunststoff-Formgebungsverfahren für die Herstellung der Ausgangsprodukte im Umformprozess genutzt werden.

Die Erfindung soll nachfolgend anhand eines Ausführungsbeispieles näher erläutert werden. Die zugehörige Zeichnung zeigt in
Fig. 1 ein Time-Temperature-Transition-Diagramm (TTT), das den Vernetzungsgrad eines duroplastischen Kunststoffes in Abhängigkeit von der Vernetzungs- beziehungsweise Härtungstemperatur und der Vernetzungszeit zur Herstellung des Ausgangsproduktes zeigt und
Fig. 2 ein Umformschema, das den Umformprozess des Ausgangsproduktes in das Formteil sowie dessen Nachvernetzung veranschaulicht, wobei die eingezeichnete Gellinie den Vernetzungsgrad charakterisiert, ab welchem ein Aufschmelzen des duroplastischen Kunststoffes bei Erwärmung nicht mehr möglich ist.

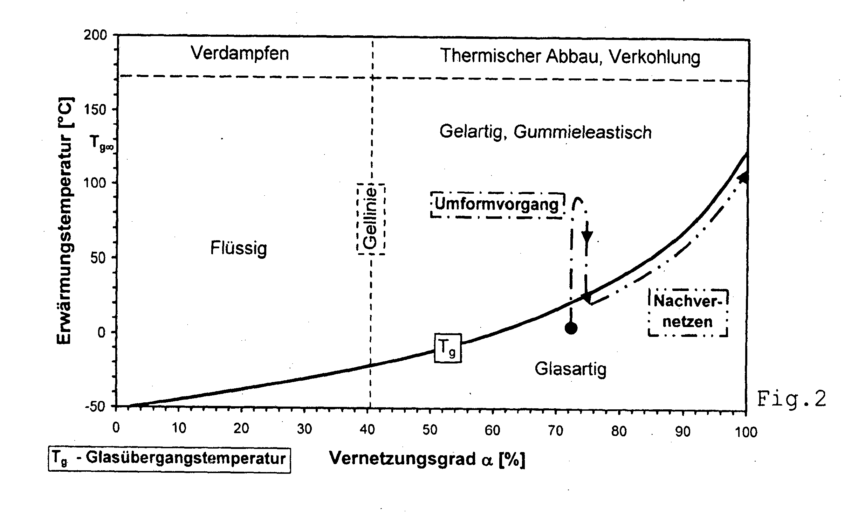

Der Umformprozess, wie er in dem Umformschema nach Fig. 2 veranschaulicht wird, beruht auf der Tatsache, dass auch ein geliertes duroplastisch vernetztes Molekülnetzwerk ab einer bestimmten Glasübergangstemperatur Tg in einen erweichten, gummielastischen Zustand übergeht, in dem eine viskoelastische Verformung des Reaktionsharzsystems möglich ist. Der umgeformte Zustand wird durch Abkühlen des Reaktionsharzsystems unterhalb seiner Glasübergangstemperatur Tg erhalten. Dabei wird der viskose Verformungsanteil spannungsfrei beibehalten, der elastische Anteil durch die Herabsetzung der Molekülkettenbeweglichkeit jedoch lediglich eingefroren. Der elastische Anteil erzeugt dabei Eigenspannungen, welche bei Erwärmung des umgeformten Bauteils über bzw. in den Bereich der Glasübergangstemperatur Tg zu einer Rückverformung des Bauteils führen würden.

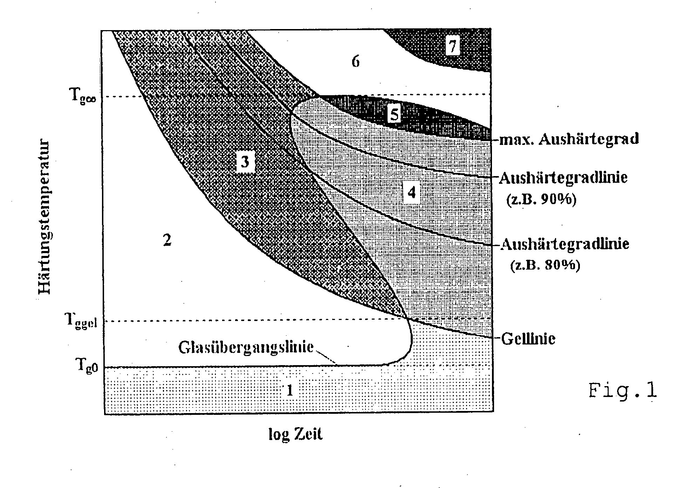

Als Ausgangsprodukt für die Umformung wird ein teilvernetztes Reaktionsharzsystem verwendet, welches jedoch soweit vernetzt ist, dass es bereits geliert ist und somit durch Erwärmung nicht wieder aufgeschmolzen werden kann - siehe hierzu Fig. 1, Bereich 4. Die einzelnen in dem Time-Temperatur-Transition-Diagramm (TTT) bezifferten Bereiche sollen dabei folgende Zustände des teilvernetzten Reaktionsharzsystemes veranschaulichen:
1 - glasartig, vollständig ungehärtet
2 - flüssig
3 - gelartig
4 - glasartig, jedoch nicht vollständig ausgehärtet
5 - glasartig, vollständig ausgehärtet
6 - gelartig, gummielastisch
7 - Abbau, verkohlt

Dieses teilvernetzte Reaktionsharzsystem hat den Vorteil, dass nur die bereits vernetzten Bereiche des Makromoleküls erweicht werden müssen und damit die Erweichung des Gesamtbauteils schneller stattfindet. Zusätzlich wird eine bessere Umformbarkeit aufgrund der unvernetzten Bereiche erreicht.

Des Weiteren ist es bei teilvernetzten Harzen möglich, den unvernetzten Anteil des Harzes erst nach der Umformung zu vernetzen. Beispielsweise kann durch langsames Erwärmen unterhalb der dem jeweiligen Vernetzungszustand immanenten Glasübergangstemperatur Tg die weitere Umsetzung freier Reaktanten erfolgen, womit weitere Vernetzungsbrücken in das Makromolekülnetzwerk eingebaut und dieses in seiner umgeformten Geometrie weiter versteift wird.

Für die Erzeugung optimal umformbarer Ausgangsprodukte ist die Kenntnis der zeit- und randbedingungsabhängigen Vernetzungen des Reaktionsharzsystems unabdingbares Erfordernis. Eine Möglichkeit bietet hierfür dass TTT-Diagramm, da es viele wichtige zeit- und temperaturabhängige Harz-Informationen, wie Aggregatzustand respektive Gelierpunkt des Harzes, Vernetzungsgrad, Glasübergangstemperatur Tg etc. aufzeigt. Es lässt sich in Bereiche mit unikal ausgewiesenen Eigenschaften des Reaktionsharzsystems während seiner Vernetzung einteilen. Das Ausgangsprodukt für den beschriebenen Umformprozess muss die Eigenschaften, welche durch den unteren Abschnitt des Bereichs "glasartig jedoch nicht vollständig gehärtet" beschrieben werden, besitzen. Das bedeutet, dass sich das Reaktionsharzsystem im unschmelzbaren, festen, glasartigen Zustand befindet, jedoch noch ein möglichst großer Anteil des Reaktionsharzsystems unvernetzt ist. Der Vernetzungsgrad des Reaktionsharzes soll so hoch sein, dass ein Übergang in den flüssigen Aggregatzustand bei Erwärmung des Reaktionsharzes nicht mehr möglich ist. Dabei ist die unterste Temperatur, bei welcher die hiermit verbundene Gelierung überhaupt möglich ist, durch die Geltemperatur Tg0 charakterisiert.

Bei einer isothermen Vernetzung eines Reaktionsharzsystems unterhalb dieser Temperatur ist es nicht möglich, das Reaktionsharzsystem in den gelierten, also unschmelzbaren Zustand zu versetzen. Die isotherme Vernetzung sollte jedoch vorteilhaft auch nicht weit über der Geltemperatur Tggel stattfinden, um möglichst viele unvernetzte Bestandteile zu bewahren.

Auf diese Art hergestellte Ausgangsprodukte sollten bis zur Umformung unterhalb der Vernetzungstemperatur bzw. der Geltemperatur Tggel gelagert werden, damit die ungewünschte weitere Vernetzung des Reaktionsharzsystems unterbunden wird.

Nach der Umformung erfolgt, wie Fig. 2 veranschaulicht, die weitere Nachvernetzung beziehungsweise Temperung durch langsames Erwärmen jedoch immer unterhalb der dem jeweiligen Vernetzungszustand zeitlich immanenten Glasübergangstemperatur Tg. Die sich einstellende Glasübergangstemperatur Tg des zu tempernden Reaktionsharzsystems während des Temperns liegt bei ausreichend langsamer Erwärmung und unterhalb der maximal erreichbaren harzabhängigen Glasübergangstemperatur Tg^{∞} immer oberhalb der jeweiligen Tempertemperatur. Die Differenz zwischen Tempertemperatur und sich korrespondierend einstellender Glasübergangstemperatur Tg des Reaktionsharzsystems wird mit Annäherung an die maximale Glasübergangstemperatur Tg^{∞} immer geringer. Für die Temperung umgeformter Bauteile ist es daher vorteilhaft, bereits vor der maximalen Glasübergangstemperatur Tg^{∞} den Tempervorgang zu beenden, um eine Erweichung des Reaktionsharzsystems und eine damit verbundene Gefahr der Rückverformung auszuschließen.

Als Verstärkung ist sowohl eine Partikel-, Kurz-, Lang-, oder Endlosfaserverstärkung möglich. Eine Kombination verschiedener unverstärkter oder verstärkter Kunststoffe ist ebenfalls denkbar.

## Patentansprüche

1. Verfahren zur Herstellung von Formteilen aus duroplastischen Kunststoffen **dadurch gekennzeichnet, dass** ein Umformprozess der duroplastischen Kunststoffe dadurch ausgeführt wird, dass
a)zunächst ein duroplastisches, teilvernetztes Ausgangsprodukt hergestellt wird, welches einen zumindest eigenstabilen Zustand aufweist und unschmelzbar ist,
b)und das Ausgangsprodukt danach dadurch in seine Endform umgeformt wird, dass
b₁) es in einem gummielastischen Zustand in einem Bereich oberhalb der Glasübergangstemperatur (Tg) und unterhalb der Zersetzungstemperatur des jeweils vorliegenden Aushärtezustandes geformt wird,
b₂) und durch Abkühlen unterhalb der Glasübergangstemperatur (Tg) ein eigenstabiler, umgeformter Zustand des nun in seine Endform umgeformten Ausgangsproduktes, Formteils, erhalten bleibt und
c)dass anschließend das Formteil durch Nachvernetzung in einen weitestgehend vollständig vernetzten Zustand überführt wird.

2. Verfahren zur Herstellung von Formteilen nach Anspruch 1, **dadurch gekennzeichnet, dass** das Ausgangsprodukt aus einem unverstärkten Reaktionsharzsystem hergestellt wird.

3. Verfahren zur Herstellung von Formteilen nach Anspruch 1, **dadurch gekennzeichnet, dass** das Ausgangsprodukt aus einem partikel- oder faserverstärkten Reaktionsharzsystem hergestellt wird.

4. Verfahren zur Herstellung von Formteilen nach einem der Ansprüche 1 bis 3, **dadurch gekennzeichnet, dass** bei einer isothermen Vernetzung das Ausgangsprodukt in einem nahen Bereich oberhalb der Geltemperatur (Tggel) teilvernetzt wird.

5. Verfahren zur Herstellung von Formteilen nach einem der Ansprüche 1 bis 4, **dadurch gekennzeichnet, dass** ein Ausgangsprodukt hergestellt wird, welches einen glasartigen, nicht vollständig ausgehärteten Zustand aufweist.

6. Verfahren zur Herstellung von Formteilen nach einem der Ansprüche 1 bis 5, **dadurch gekennzeichnet, dass** ein nach der Teilvernetzung und vor der Umformung zwischengelagertes Ausgangsprodukt bei einer Temperatur unterhalb der Geltemperatur (Tggel) gehalten wird.

7. Verfahren zur Herstellung von Formteilen nach einem der Ansprüche 1 bis 6, **dadurch gekennzeichnet, dass** das Ausgangsprodukt zum Erreichen des formbaren gummielastischen Zustands in einen Bereich oberhalb der Glasübergangstemperatur (Tg) und unterhalb der Zersetzungstemperatur erhitzt wird.

8. Verfahren zur Herstellung von Formteilen nach einem der Ansprüche 1 bis 7, **dadurch gekennzeichnet, dass** das Formteil während der Nachvernetzung unterhalb der dem jeweiligen Vernetzungsgrad immanenten Glasübergangstemperatur gehalten wird.

## Claims

1. Method for the manufacture of mouldings from thermosetting plastics, **characterised in that** a reshaping process is performed for the thermosetting plastics by
a) initially a thermosetting, partially cross-linked starting product being produced which has at least an inherently stable condition and is infusible,
b) and the starting product then being reshaped into its final shape by
b₁) it being shaped within a rubbery-elastic state in a range above the glass transition temperature (Tg) and below the decomposition temperature of the particular state of hardening present,
b₂) and, through cooling below the glass transition temperature (Tg) an inherently stable, reformed state of the starting product that has now been reshaped into its final shape, a moulding, being preserved and
c) subsequently the moulding being converted by means of post-cross linking into a - as far as possible - fully cross-linked state.

2. Method for the manufacture of mouldings in accordance with claim 1, **characterised in that** the starting product is manufactured from an unreinforced reaction resin system.

3. Method for the manufacture of mouldings in accordance with claim 1, **characterised in that** the starting product is manufactured from a particle- or fibre-reinforced reaction resin system.

4. Method for the manufacture of mouldings in accordance with one of claims 1 to 3, **characterised in that**, in an isothermic cross-linking process, the starting product is cross-linked in a range near to but above the gel temperature (Tggel).

5. Method for the manufacture of mouldings in accordance with one of claims 1 to 4, **characterised in that** a starting product is manufactured which has a glassy, not fully hardened state.

6. Method for the manufacture of mouldings in accordance with one of claims 1 to 5, **characterised in that** a starting product that is stored temporarily following the partial cross-linking and before the reshaping is kept at a temperature below the gel temperature (Tggel).

7. Method for the manufacture of mouldings in accordance with one of claims 1 to 6, **characterised in that** the starting product, in order to attain the mouldable rubbery-elastic state, is heated in a range above the glass transition temperature (Tg) and below the decomposition temperature.

8. Method for the manufacture of mouldings in accordance with one of claims 1 to 7, **characterised in that** the moulding is, during post-cross-linking, kept below the glass transition temperature intrinsic to the particular degree of cross-linking.

## Revendications

1. Procédé de fabrication de pièces façonnées en plastiques thermodurcissables, **caractérisé en ce qu'**un processus de déformation des plastiques thermodurcissables comprend
a) d'abord la fabrication d'un produit de départ thermodurcissable partiellement réticulé qui présente un état au moins autostable et qui est infusible,
b) et puis la procédure de déformation du produit de départ en sa forme finale, qui comprend
b₁) la moulure du produit de départ à l'état élastique dans une plage supérieure à la température de transition vitreuse (Tg) et sous la température de décomposition de l'état de solidification respectivement en cours,
b₂) puis le maintien par refroidissement sous la température de transition vitreuse (Tg) d'un état autostable façonné du produit de départ maintenant moulé dans sa forme finale, c'est-à-dire de la pièce façonnée, et
c) finalement la postréticulation de la pièce façonnée afin de la faire passer à l'état le plus réticulé possible.

2. Procédé de fabrication de pièces façonnées selon la revendication 1, **caractérisé en ce que** le produit de départ est produit à partir d'un système de résine composite non renforcé.

3. Procédé de fabrication de pièces façonnées selon la revendication 1, **caractérisé en ce que** le produit de départ est produit à partir d'un système de résine composite avec renforcement fibreux ou particulaire.

4. Procédé de production de pièces façonnées selon au moins l'une des revendications 1 à 3, **caractérisé en ce que** lors d'une réticulation isotherme, le produit de départ est partiellement réticulé dans une plage proche et au-delà de la température de gel (Tggel).

5. Procédé de production de pièces façonnées selon au moins l'une des revendications 1 à 4, **caractérisé en ce qu'**est fabriqué un produit de départ présentant un état vitreux et pas entièrement durci.

6. Procédé de production de pièces façonnées selon au moins l'une des revendications 1 à 5, **caractérisé en ce qu'**un produit de départ entreposé après la réticulation partielle et avant la déformation est maintenu à une température sous la température de gel (Tggel).

7. Procédé de production de pièces façonnées selon au moins l'une des revendications 1 à 6, **caractérisé en ce que** le produit de départ est réchauffé jusqu'à une température au-dessus de la température de transition vitreuse (Tg) et sous la température de décomposition afin d'atteindre l'état élastique déformable.

8. Procédé de production de pièces façonnées selon au moins l'une des revendications 1 à 7, **caractérisé en ce que** lors de la postréticulation, la pièce façonnée est maintenue sous la température de transition vitreuse immanente au degré de réticulation respectif.
